# EUROPEAN PATENT SPECIFICATION

(11) **EP 2 739 890 B1**
(45) Date of publication and mention of the grant of the patent: **01.06.2016**
(21) Application number: 11870260.4
(22) Date of filing: 04.08.2011
(51) Int. Cl.: F16L 11/22, F24J 3/08, F16L 1/028

(54) **PIPE IN LOW-ENERGY SYSTEM AND METHOD FOR INSTALLING THIS**
ROHR IN EINEM NIEDERENERGETISCHEN SYSTEM UND VERFAHREN ZU SEINER MONTAGE
TUBE INCLUS DANS UN SYSTÈME À BASSE ÉNERGIE ET SON PROCÉDÉ DE MONTAGE

(43) Date of publication of application: 11.06.2014
(73) Proprietor: Lieskoski, Nils Johan, 65280 Vaasa (FI)
(72) Inventor: Lieskoski, Nils Johan, 65280 Vaasa (FI)
(74) Representative: Kolster Oy Ab
(86) International application number: PCT/FI2011/050688
(87) International publication number: WO 2013/017730

(56) References cited:
- DE-A1-102007 024 561
- DE-A1-102007 024 561
- DE-A1-102009 031 364
- KR-B1- 101 044 737
- KR-B1- 101 044 737

## Description

### Background of the invention

The invention relates to a pipe in a low-energy system as claimed in the preamble of claim 1.

The invention also relates to a method for installing such a pipe in a low-energy system as claimed in the preamble of claim 11.

Such a pipe is utilized particularly in systems where energy - both heat energy and cooling energy - is transferred by an exchanger unit from the ground, rock or water via a transfer liquid. Said exchanger unit may consist of a heat pump or an air conditioning radiator.

A low-energy system refers in this context to a system, the energy source of which has a low temperature, which temperature may most conventionally be -5 to +12°C. In this specification, low energy refers to the energy content produced by an energy source, such as the ground, rock or water. Utilization of low energy of the ground, rock or water has usually meant heating of a building and water by using a heat pump and various heat exchange loops, for instance. Usually, 2 to 4 units of heat are obtained per one electric energy unit used. In cold climatic conditions, consumption of heating energy in real estates is considerable, wherefore utilization of low-energy systems is more and more profitable as the costs of electricity and oil are on the increase.

The present exchange loop and exchange method may naturally also be utilized for cooling interiors. In such a case, cool transfer liquid from the heat exchange loop is circulated via cooling beams, an air conditioning radiator or similar devices, for instance.

So far, a very common way of exchanging energy has been to position an exchange loop, i.e. a "ground exchange loop", in the soil layer surrounding a building, where it is buried below the frost line substantially horizontally. The positioning of horizontal and sufficiently efficient exchange pipes in the ground requires that a sizeable pipe trench system be dug along the entire length of the ground exchange loop, which makes it difficult to position the pipes, for instance, in a yard area or park without considerably damaging roots of plants and trees.

Another way of exchanging energy is to place an exchange loop on the bottom of a lake or another water body, whereby energy is transferred from the bottom sediment and water to a transfer liquid. A liquid-filled pipe is, however, lighter than the surrounding water and tends to rise towards the surface. Portions of the exchange pipes that have risen in an irregular manner may cause air pockets in the exchange pipes, thus impairing the circulation of transfer liquid. To ensure a constant energy yield, the exchange pipes should be anchored to the bottom of the water body.

A third way of exchanging energy, which becomes rapidly more common nowadays, is a 'heat exchange well'. Here, special pipes forming a ground exchange loop are embedded in a deep vertical borehole preferably drilled in the rock. Although a very small area is needed for a heat exchange well compared to a horizontal pipe system, the depth of the well to be drilled is great and, thus, the costs thereof are high. DE 102009031364A represents a document showing the features of the preamble.

### Brief description of the invention

It is thus an object of the present invention to provide a pipe for a low-energy system, with which it is mainly possible to avoid above-mentioned problems.

More specifically, the pipe of the invention is mainly characterized by what is disclosed in the characterizing part of claim 1. The method for installing a pipe, for its part, is mainly characterized by what is disclosed in the characterizing part of claim 11. The preferred embodiments of the invention are disclosed in the dependent claims.

The invention is based on the idea that a pipe guiding a transfer liquid consists of two parts so that the parts may be bent against one another and fastened to one another in this position. In this state, the pipe may be led to, for instance, a borehole provided in the soil, where the parts are allowed to open conchoidally so that the parts are pressed against the walls of the borehole, thus boosting the transfer of heat to the transfer liquid considerably.

The invention provides significant advantages. Thus, the pipe parts connected to one another by a dissolving connection means allow the pipe to be led to a borehole that is smaller than usual, where the dissolving of the connection means causes the pipe parts to be pressed against the surrounding soil, thus improving the heat transfer properties of the pipe.

Since the pipe parts open under the influence of a spring force of a bridge, no separate means for separating the pipes are needed. The parts of the pipe according to the invention always tend to separate from one another by themselves, which makes it possible to avoid problems related to a conventional installation method, in which parallel pipes installed in a borehole are positioned in a very undefined manner along the cross-section of the borehole. Usually the pipes are driven to close proximity to one another, whereby there may occur disadvantageous mutual heat transfer between the pipes. With the present pipe in which the pipe parts are always separate from one another, the heat energy deeper down can be conveyed to the top.

By manufacturing two pipe parts simultaneously from plastic by extrusion, for instance, the manufacture naturally becomes more effective. At the same time, the material "memory" associated with the manufacturing material may be utilized in the manufacture, which means that a compressed pipe tends to return to its original shape.

The same pipe may naturally be utilized both when immersing it in water and by burying it in the ground. When a pipe is immersed in water, the required weights may preferably be arranged in a groove between the pipes, to which they are easy to fasten and whereby it can also be made sure that the weights remain in their places. When dug into the ground, the pipe parts can be opened such that they form adjacent channels, whereby all surfaces of the outer surface of these channels are in contact with the surrounding soil. When the pipe of the invention is used as a ground-dug pipe, it is even advantageous to install it in such a manner that a parallel flow in the same direction takes place in both parts of the pipe. In this case, the first end of the pipe is connected to a return pipe and the second end is connected to an inlet pipe.

Other advantages of the invention are presented in the following in connection with a more detailed description of special embodiments of the invention.

### Brief description of the figures

In the following, some preferred embodiments of the invention are explained in closer detail with reference to the accompanying drawing, in which
Figure 1 shows a site of application of a pipe of the invention in a low-energy system,
Figure 2 shows a first embodiment of the pipe of the invention from an end, the pipe being installed in a borehole,
Figure 3 shows a second embodiment of the pipe of the invention from an end, the pipe being installed in a borehole,
Figure 4 shows the second embodiment of the pipe of the invention, the pipe being installed in a larger borehole,
Figure 5 shows the pipe of Figures 3 and 4 as an axonometric view,
Figure 6 and 7 show a third embodiment of the pipe of the invention as axonometric views,
Figure 8 shows a fourth embodiment of the pipe of the invention, the pipe being installed pairwise in the large borehole of Figure 4,
Figures 9 and 10 show the pipe of Figure 8 as axonometric views, and
Figures 11 and 12 show a compressed pipe with its connection means.

### Detailed description of preferred embodiments

The present figures do not show the pipe in scale but the figures are schematic, illustrating the structure and operation of the preferred embodiments in principle. The structural parts indicated by reference numbers in the attached figures then correspond to the structural parts marked with reference numbers in this specification.

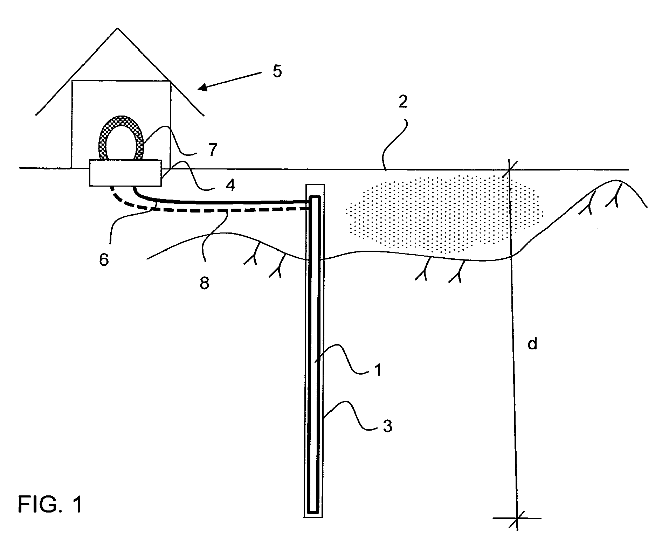

Figure 1 schematically shows the low-energy system in question and its site of application, where a pipe 1 is positioned substantially vertically in a bore 3 below the ground surface 2. The bore and the pipe usually extend to a depth varying according to the properties of the soil and the bedrock and the amount of energy to be exchanged such that d is 100 to 300 metres.

An exchanger unit, i.e. a heat exchange means 4, utilizes heat energy accumulated in the pipe 1 and transfers it to a house 5 along an inlet pipe 6 connecting the exchanger unit and the pipe exchanging heat energy. In the house, the heat energy is circulated through a heating circuit 7, for example, while the transfer liquid returns along a return pipe 8 back to the pipe exchanging heat energy. The heat exchange means 4 may be a groundsource heat pump, for instance.

The same pipe 1 may naturally also be utilized when heat energy is exchanged by using, for instance, exchange pipes installed in the soil layer or by using exchange pipes installed in a water body or its sediment layer, although these embodiments are not separately illustrated by figures in this context.

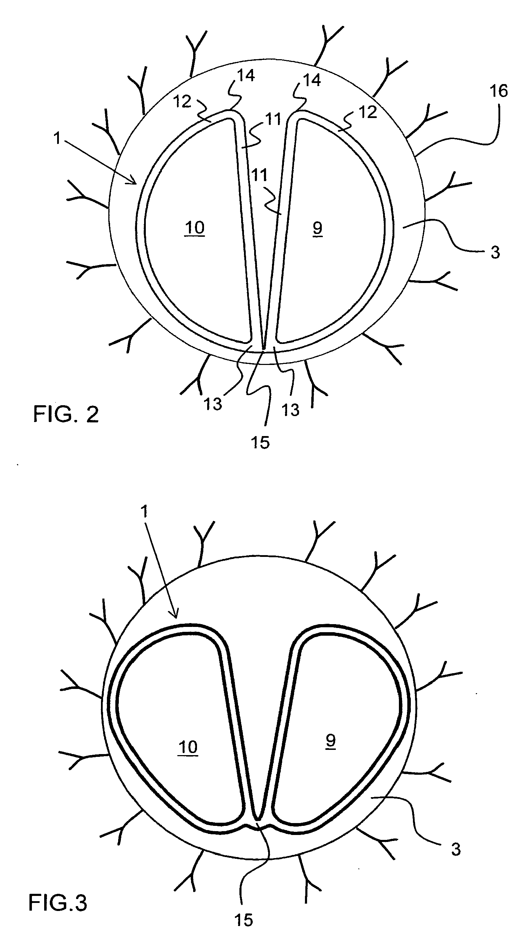

Figure 2 shows a first embodiment of the pipe 1 installed in the bore 3. There is shown, for instance, a pipe installed in a 115 mm borehole, the pipe comprising, connected to one another, a supply portion 9 for guiding the transfer liquid to a heat source, i.e. the bore and the surrounding soil and bedrock, and a return portion 10 for guiding the transfer liquid back to one or more heat exchange means 4.

As the figure shows, the supply portion 9 and the return portion 10 comprise inner surfaces 11 oriented towards one another and outer surfaces 12 oriented towards the heat source surrounding the pipe. These outer surfaces are arranged to curve away from the inner surface but are connected with each inner surface such that, at the connection points, a base 13, on the one hand, and a tip 14 opposite to the base, on the other hand, are formed. What is essential to this pipe structure, however, is a bridge 15 that combines the supply portion and the return portion at their bases. The bridge is arranged to be elastic, allowing the supply portion and the return portion to turn with respect to one another. This allows the pipe parts guiding the transfer liquid to open conchoidally, whereby the outer surfaces of the supply portion and the return portion may be pressed against a wall 16 of the borehole, thus boosting the transfer of heat to the transfer liquid.

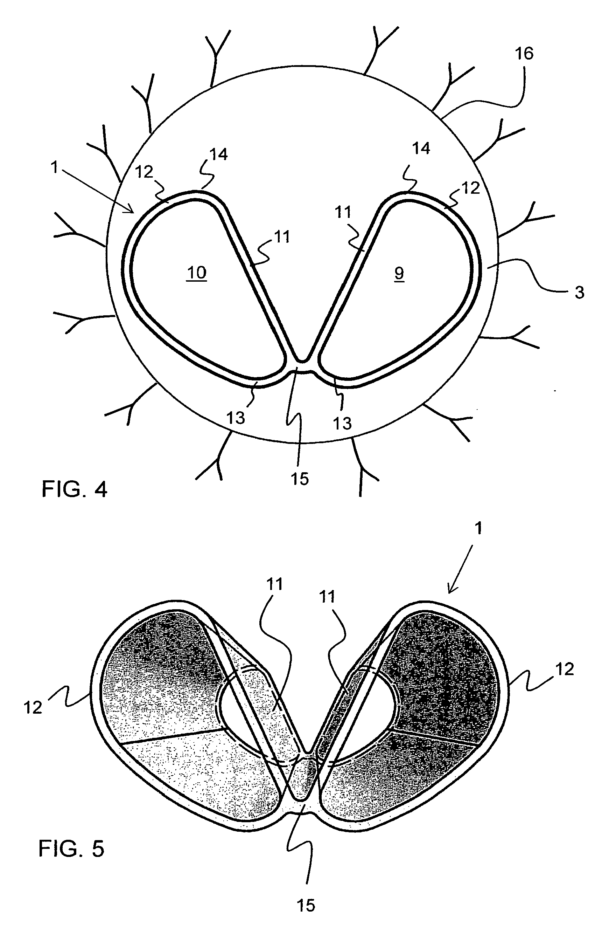

When the pipe 1 is manufactured preferably by extruding from, for example, polyethylene or some other plastic suitable for the purpose, the cross-sectional profile of the pipe may easily be optimized for different purposes of use. The pipe of Figure 2 consisting of two semi-circles is advantageous, because it has a large contact surface. On the other hand, a somewhat drop-like cross-section according to Figures 3 to 5 ensures a better pressure resistance and a greater volume of the pipe parts. For example, the total volume of the pipe of Figure 3 is approximately 3 litres per metre. What is essential when compared to a conventional prior art pipe with a round cross-section, however, is that these embodiments have a better heat exchange capability, because the ratio of the casings of the pipe parts to the transfer liquid circulating in the pipe part is considerably higher than in conventional pipes with a round cross-section. A great volume of the pipe provides the exchanger unit with a sufficient liquid flow also in extensive systems, and the heat accumulation capacity of a water-alcohol mixture is sufficient for also fulfilling the needs of heat pumps used in these systems as exchanger units. The embodiment according to these figures also shows a bridge 15 design, which ensures that the relative movement of the supply portion 9 and the return portion 10 takes place as easily as possible.

When the pipe 1 is manufactured in such a manner that, at the manufacturing stage, there is as large an angle as possible, such as an angle of 25 to 60 degrees, between the supply portion 9 and the return portion 10, a spring force is produced at the bridge 15, which force may be utilized in the installation of the pipe to provide a contact between said pipe and the wall 16 of the borehole. The spring force may even be intensified by providing the bridge with a special spring member, which is arranged to form an angle between the inner surfaces 11 of the supply portion and the return portion.

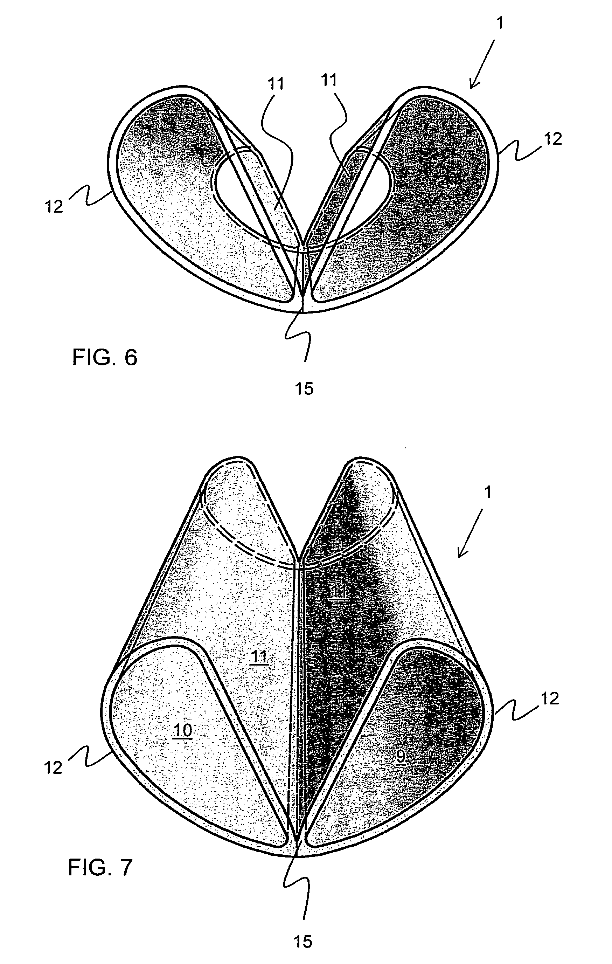

Figures 6 and 7 show an alternative bridge 15 shape, which corresponds to that of the embodiment of Figure 2 and in which a pressure produced by the transfer liquid at the pipe 1 can be utilized instead of a spring force. Thus, the transfer liquid that mainly fills the supply portion 9 and return portion 10 of the pipe causes a deformation, i.e. bulging, in the substantially straight inner surfaces 11 having a substantially straight shape, when it tries to round the cross-section of the pipe part. Such a deformation of the opposite surfaces causes that the supply portion and the return portion move away from each other, pressing the outer surfaces 12 of the pipe opening conchoidally against the wall 16 of the borehole 3.

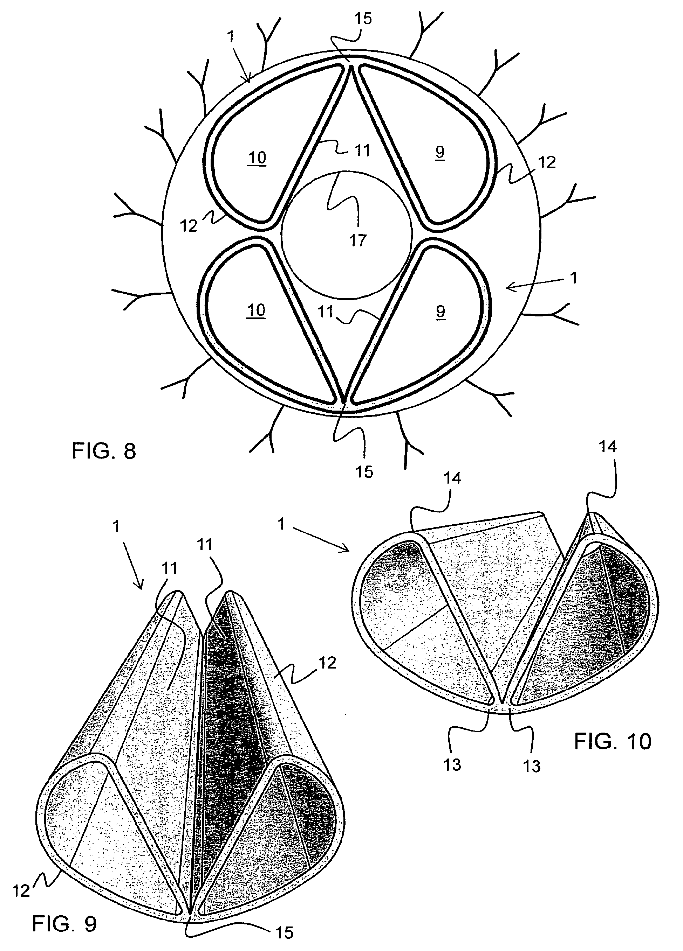

A smaller variation of this embodiment is further shown in Figures 8 to 10. In this case, two pipes 1 may be installed in the same borehole 3. To ensure the opening of the pipe, an expansion means 17 may be inserted between the pipes, which, filled with water or another medium, presses the outer surfaces of the opposite pipes against the wall 16 of the borehole.

Such a pipe according to Figures 8 to 10 has a total volume of approximately 2 litres per metre. The present pipes may be installed in boreholes having a diameter of 92, 100 or 115 mm, which also makes the drilling as advantageous as possible.

By examining Figures 2 to 10 it can be noted that the curved outer surface 12 of the supply portion 9 and the return portion 10 preferably comprises a continuous arched surface consisting of a substantially circular arch, but, on the other hand, there is no reason why the substantially curved outer surface could not consist of a broken line, in which case it forms a discontinuous arched surface, which, however, can be pressed sufficiently well against the wall of the bore. It is also to be noted that the manufacturing material of the pipe 1 and the dimensions of its parts may differ from the ones shown herein.

It may also be noted that it is particularly advantageous to shape the supply portion 9 and the return portion 10 in such a manner that they are symmetrical in a mirrored way. Such a symmetry comprises either a mainly semi-circular cross-sectional shape of Figure 2 or a mainly drop-like cross-sectional shape of Figures 3 to 10, where the bridge 15 is arranged at the base 13 at the sharp end of the drop formed by the supply portion and the return portion. Although the attached figures show that the bridge 15 is located at the narrower end of the drop-like pipe part, nothing prevents it from being arranged alternatively at the thicker end of the pipe part.

Utilization of the present pipe 1 in a low-energy system takes place in the following manner.

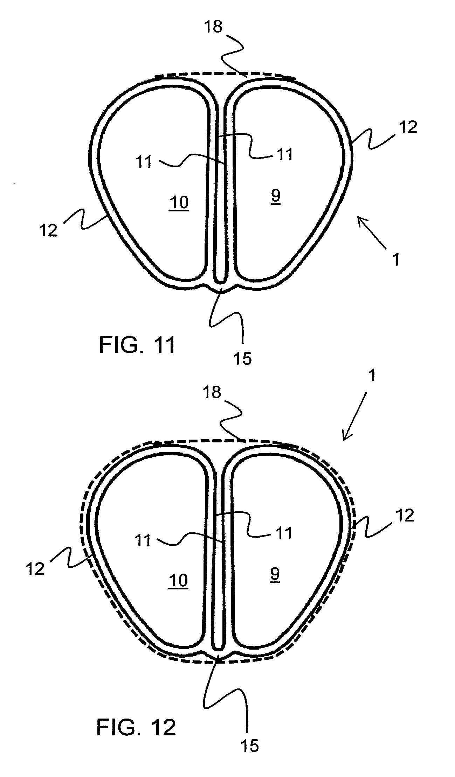

The inner surfaces 11 of the supply portion 9 and return portion 10 of the pipe 1 oriented towards one another are pressed against one another. To maintain the pipe in this shape, in which it can be guided into the borehole 3 already provided at an earlier stage, the supply portion and the return portion are, if required, connected to one another by separate dissolving connection means 18 opposite to the bridge 15 connecting the supply portion and the return portion to one another. Such a connection means may consist of tape arranged at regular intervals and connecting the supply portion and the return portion to one another, cf. Figure 11.

The connection means may also consist of, for instance, a sleeve that surrounds the pipe casing completely, cf. Figure 12.

The pipe 1 merged in this way is guided into the borehole 3 provided in the soil so that the end of the first pipe that is placed lowest in the borehole is provided with an end part known per se, which guides the flow of transfer liquid from the supply portion 9 to the return portion 10. It is to be noted that the flow direction may also be opposite. The end part may be fastened to the pipe in a suitable manner, such as by welding. After this, one pipe at a time is lowered into the borehole, and the successive pipes are connected to one another by, for instance, welding in order to provide a continuous exchange pipe along the entire length of the borehole.

The pipe 1 installed in the borehole 3 is connected in a manner shown in Figure 1 to the inlet pipe 6 and the return pipe 8, via which it is connected to at least one heat exchange means 4.

Finally, the connections of the connection means 18 are dissolved, and the curved outer surfaces 12 of the supply portion 9 and the return portion 10 opposite to the inner surfaces 11 are pressed against the wall 16 of the borehole 3. The pressing is implemented by a rotational motion with respect to the elastic bridge 15 connecting the supply portion and the return portion to one another. Most preferably, the connection means is dissolved by utilizing, in connecting the supply portion and the return portion to one another, a connection means that dissolves under the influence of moisture.

The relative rotational motion of the supply portion 9 and the return portion 10 is implemented in the above manner by manufacturing the pipe 1 by, for instance, extrusion so that the supply portion and the return portion form an angle of, for example, 25 to 60 degrees between their inner surfaces at the bridge 15. Hence, a spring force that has accumulated at the bridge during the pipe compression forces the supply portion and the return portion that have been pressed against one another to move away from one another when the connection means is dissolved.

As described above, a similar rotational motion is also provided by causing a deformation, i.e. bulging, in the inner surfaces of the supply portion 9 and the return portion 10 when the supply portion and the return portion are filled with transfer liquid. When pressed against one another, these deformations of the opposite inner surfaces, for their part, cause a movement that brings the supply portion and the return portion further away from one another.

It is obvious to one skilled in the art that as technology advances, the basic idea of the invention may be implemented in many different ways. The invention and its embodiments are thus not restricted to the examples described above but may vary within the scope of the claims.

## Claims

1. A pipe (1) in a low-energy system, the pipe comprising, connected to one another, a supply portion (9) for guiding transfer liquid to a heat source and a return portion (10) for guiding the transfer liquid back to one or more heat exchange means (4),
the supply portion (9) and the return portion (10) comprising inner surfaces (11) oriented towards one another and outer surfaces (12) oriented towards the heat source surrounding the pipe (1),
the outer surfaces being connected with the inner surface at each base (13) of the supply portion and the return portion, on the one hand, and at a tip (14) opposite thereto,
the outer surfaces (12) being arranged to curve away from the inner surfaces (11), whereby
the supply portion and the return portion being connected to one another by an elastic bridge (15), **characterized in that**
the supply portion and the return portion are turnable with respect to one another.

2. The pipe (1) as claimed in claim 1, **characterized in that** the curved outer surface (12) comprises a continuous arched surface consisting of a substantially circular arch.

3. The pipe (1) as claimed in claim 1, **characterized in that** the curved outer surface (12) comprises a discontinuous arched surface consisting of a broken line.

4. The pipe (1) as claimed in any one of the preceding claims, **characterized in that** the pipe (1) is manufactured by extrusion so that the supply portion (9) and the return portion (10) form an angle of 25 to 60 degrees between their inner surfaces (11) at the bridge (15).

5. The pipe (1) as claimed in claim 4, **characterized in that** the bridge (15) is provided with a spring member, which is arranged to form an angle between the inner surfaces (11) of the supply portion (9) and the return portion (10).

6. The pipe (1) as claimed in any one of the preceding claims, **characterized in that** the supply portion (9) and the return portion (10) are symmetrical in a mirrored way.

7. The pipe (1) as claimed in any one of the preceding claims, **characterized in that** the supply portion (9) and the return portion (10) have a mainly semi-circular cross-sectional shape.

8. The pipe (1) as claimed in any one of the preceding claims, **characterized in that** the supply portion (9) and the return portion (10) have a mainly drop-like cross-sectional shape, the bridge (15) being arranged at the sharp base (13) of the drop.

9. The pipe (1) as claimed in any one of claims 1 to 7, **characterized in that** the supply portion (9) and the return portion (10) have a mainly drop-like cross-sectional shape, the bridge (15) being arranged at the thicker end (14) of the drop.

10. The pipe (1) as claimed in any one of the preceding claims, **characterized in that** the supply portion (9) and the return portion (10) are connected to one another by a connection means (18) that dissolves under the influence of moisture.

11. A method for installing a pipe (1) in a low-energy system, wherein the pipe (1) comprising, connected to one another, a supply portion (9) for guiding transfer liquid to a heat source and a return portion (10) for guiding the transfer liquid back to one or more heat exchange means (4) is guided into a borehole (3) provided in the soil, **characterized by**
pressing inner surfaces (11) of the supply portion (9) and the return portion (10) oriented towards one another against one another, and connecting the supply portion and the return portion to one another by a dissolving connection means (18),
guiding the pipe (1) into the borehole (3) provided in the soil,
causing a dissolving of the connection of the dissolving connection means (18) and a pressing of curved outer surfaces (12) of the supply portion (9) and the return portion (10) opposite to the inner surfaces (11) against a wall (16) of the borehole (3) by a rotational motion, which is implemented with respect to an elastic bridge (15) connecting the supply portion and the return portion to one another.

12. The method as claimed in claim 11, **characterized by** connecting the supply portion (9) and the return portion (10) to one another by a connection means (18) that dissolves under the influence of moisture.

13. The method as claimed in claim 11 or 12, **characterized by** manufacturing the pipe (1) by extrusion so that the supply portion (9) and the return portion (10) form an angle of 25 to 60 degrees between their inner surfaces (11) at the bridge (15), and
when the connection means (18) is dissolved, the bridge (15) forces the supply portion and the return portion that have been pressed against one another to move away from one another under the influence of a spring force accumulated at the bridge.

14. The method as claimed in claim 11 or 12, **characterized in that** when the supply portion (9) and the return portion (10) are filled with transfer liquid, the inner surfaces (11) bulge,
and when pressed against one another, the deformations cause a movement that brings the supply portion and the return portion further away from one another.

## Patentansprüche

1. Eine Rohrleitung (1) in einem Niedrig-Energie-System, wobei die Rohrleitung einen Versorgungsabschnitt (9) zur Führung von Übertragungsflüssigkeit zu einer Wärmequelle und einen Rücklaufabschnitt (10) zur Rückführung der Übertragungsflüssigkeit zu einem oder mehreren Wärmetauschmitteln (4) umfasst, die beide miteinander verbunden sind,
wobei der Versorgungsabschnitt (9) und der Rücklaufabschnitt (10) Innenflächen (11), die zueinander orientiert sind, sowie Außenflächen (12) umfassen, die zur Wärmequelle orientiert sind, welche die Rohrleitung (1) umgibt,
wo die Außenfläche einerseits an jeder Basis (13) des Versorgungsabschnitts und des Rücklaufabschnitts mit der Innenfläche und andererseits an einer gegenüberliegenden Spitze (14) verbunden ist,
wo die Außenflächen (12) so angeordnet sind, dass sie sich von den Innenflächen (11) wegkrümmen, wobei
der Versorgungsabschnitt und der Rücklaufabschnitt über eine elastische Überbrückung (15) miteinander verbunden sind,
**dadurch gekennzeichnet, dass** der Versorgungsabschnitt und der Rücklaufabschnitt in Bezug aufeinander drehbar sind.

2. Die Rohrleitung (1) gemäß Anspruch 1, **dadurch gekennzeichnet, dass** die gekrümmte Außenfläche (12) eine kontinuierliche bogenförmige Oberfläche umfasst, die aus einem im Wesentlichen runden Bogen besteht.

3. Die Rohrleitung (1) gemäß Anspruch 1, **dadurch gekennzeichnet, dass** die gekrümmte Außenfläche (12) eine diskontinuierliche bogenförmige Oberfläche umfasst, die aus einer unterbrochenen Leitung besteht.

4. Die Rohrleitung (1) gemäß einem der vorstehenden Ansprüche, **dadurch gekennzeichnet, dass** die Rohrleitung (1) durch Extrusion hergestellt wird, sodass der Versorgungsabschnitt (9) und der Rücklaufabschnitt (10) an der Überbrückung (15) einen Winkel von 25 bis 60 Grad zwischen deren Innenflächen (11) bilden.

5. Die Rohrleitung (1) gemäß Anspruch 4, **dadurch gekennzeichnet, dass** die Überbrückung (15) mit einem Federglied bestückt ist, das angeordnet ist, um einen Winkel zwischen den Innenflächen (11) des Versorgungsabschnitts (9) und des Rücklaufabschnitts (10) zu bilden.

6. Die Rohrleitung (1) gemäß einem der vorstehenden Ansprüche, **dadurch gekennzeichnet, dass** der Versorgungsabschnitt (9) und der Rücklaufabschnitt (10) symmetrisch gespiegelt sind.

7. Die Rohrleitung (1) gemäß einem der vorstehenden Ansprüche, **dadurch gekennzeichnet, dass** der Versorgungsabschnitt (9) und der Rücklaufabschnitt (10) im Wesentlichen eine halbrunde Querschnittsform aufweisen.

8. Die Rohrleitung (1) gemäß einem der vorstehenden Ansprüche, **dadurch gekennzeichnet, dass** der Versorgungsabschnitt (9) und der Rücklaufabschnitt (10) im Wesentlichen eine tropfenförmige Querschnittsform aufweisen, wobei die Überbrückung (15) an der scharfen Basis (13) des Tropfens angeordnet ist.

9. Die Rohrleitung (1) gemäß einem der vorstehenden Ansprüche 1 bis 7, **dadurch gekennzeichnet, dass** der Versorgungsabschnitt (9) und der Rücklaufabschnitt (10) im Wesentlichen eine tropfenförmige Querschnittsform aufweisen, wobei die Überbrückung (15) am dickeren Ende (14) des Tropfens angeordnet ist.

10. Die Rohrleitung (1) gemäß einem der vorstehenden Ansprüche, **dadurch gekennzeichnet, dass** der Versorgungsabschnitt (9) und der Rücklaufabschnitt (10) über Verbindungsmittel (18) miteinander verbunden sind, die sich unter Einfluss von Feuchtigkeit auflösen.

11. Ein Verfahren zur Installation einer Rohrleitung (1) in einem Niedrig-Energie-System, wo die Rohrleitung (1) einen Versorgungsabschnitt (9) zur Führung von Übertragungsflüssigkeit zu einer Wärmequelle und einen Rücklaufabschnitt (10) zur Rückführung der Übertragungsflüssigkeit zu einem oder mehreren Wärmetauschmitteln (4) umfasst, die beide miteinander verbunden sind, und in ein Bohrloch (3) im Boden führen, **gekennzeichnet durch** das
Aneinanderpressen der zueinander orientierten Innenflächen (11) des Versorgungsabschnitts (9) und des Rücklaufabschnitts (10) und den Anschluss von dem Versorgungsabschnitt und dem Rücklaufabschnitt miteinander über sich auflösende Verbindungsmittel (18),
die Einführung der Rohrleitung (1) in das im Boden vorgesehene Bohrloch (3),
die Bewirkung der Auflösung der Verbindung der sich auflösenden Verbindungsmittel (18) und ein Pressen der gekrümmten Außenflächen (12) des Versorgungsabschnitts (9) und des Rücklaufabschnitts (10), die den Innenflächen (11) gegenüber liegen, gegen eine Wand (16) des Bohrlochs (3) **durch** eine Drehbewegung, die in Bezug auf eine elastische Überbrückung (15) ausgeführt wird und den Versorgungsabschnitt und den Rücklaufabschnitt miteinander verbindet.

12. Das Verfahren gemäß Anspruch 11, **dadurch gekennzeichnet, dass** der Versorgungsabschnitt (9) und der Rücklaufabschnitt (10) miteinander durch Verbindungsmittel (18) verbunden werden, die sich unter Einfluss von Feuchtigkeit auflösen.

13. Das Verfahren gemäß Anspruch 11 oder 12, **dadurch gekennzeichnet, dass** die Rohrleitung (1) durch Extrusion hergestellt wird, sodass der Versorgungsabschnitt (9) und der Rücklaufabschnitt (10) an der Überbrückung (15) einen Winkel von 25 bis 60 Grad zwischen deren Innenflächen (11) bilden, und dass wenn die Verbindungsmittel (18) aufgelöst sind, die Überbrückung (15) den Versorgungsabschnitt und den Rücklaufabschnitt, die aneinander gepresst worden sind, unter dem Einfluss der an der Überbrückung kumulierten Federkraft die beiden Abschnitte voneinander weg forciert.

14. Das Verfahren gemäß Anspruch 11 oder 12, **dadurch gekennzeichnet, dass**, wenn der Versorgungsabschnitt (9) und der Rücklaufabschnitt (10) mit Übertragungsflüssigkeit gefüllt sind, die Innenflächen (11) ausbeulen, und dass, wenn sie aneinander gepresst werden, die Deformationen eine Bewegung verursachen, welche den Versorgungsabschnitt und den Rücklaufabschnitt noch weiter voneinander entfernen.

## Revendications

1. Tuyau (1) dans un système à basse énergie, le tuyau comprenant, reliées l'une à l'autre, une partie d'alimentation (9) pour guider du liquide de transfert vers une source de chaleur et une partie de retour (10) pour guider le liquide de transfert en retour vers un ou plusieurs moyens d'échange de chaleur (4),
la partie d'alimentation (9) et la partie de retour (10) comprenant des surfaces intérieures (11) orientées les unes vers les autres et des surfaces extérieures (12) orientées vers la source de chaleur entourant le tuyau (1),
les surfaces extérieures étant reliées à la surface intérieure au niveau de chaque base (13) de la partie d'alimentation et de la partie de retour, d'une part, et au niveau d'un embout (14) opposé à celle-ci,
les surfaces extérieures (12) étant agencées pour se courber loin des surfaces intérieures (11), de sorte que
la partie d'alimentation et la partie de retour étant reliées l'une à l'autre par un pont élastique (15), **caractérisé en ce que**
la partie d'alimentation et la partie de retour peuvent être tournées l'une par rapport à l'autre.

2. Tuyau (1) selon la revendication 1, **caractérisé en ce que** la surface extérieure courbée (12) comprend une surface arquée continue consistant en un arc sensiblement circulaire.

3. Tuyau (1) selon la revendication 1, **caractérisé en ce que** la surface extérieure courbée (12) comprend une surface arquée discontinue consistant en une ligne brisée.

4. Tuyau (1) selon l'une quelconque des revendications précédentes, **caractérisé en ce que** le tuyau (1) est fabriqué par extrusion de sorte que la partie d'alimentation (9) et la partie de retour (10) forment un angle de 25 à 60 degrés entre leurs surfaces intérieures (11) au niveau du pont (15).

5. Tuyau (1) selon la revendication 4, **caractérisé en ce que** le pont (15) est muni d'un élément formant ressort, qui est agencé pour former un angle entre les surfaces intérieures (11) de la partie d'alimentation (9) et de la partie de retour (10).

6. Tuyau (1) selon l'une quelconque des revendications précédentes, **caractérisé en ce que** la partie d'alimentation (9) et la partie de retour (10) sont symétriques à la façon d'un miroir.

7. Tuyau (1) selon l'une quelconque des revendications précédentes, **caractérisé en ce que** la partie d'alimentation (9) et la partie de retour (10) ont une forme en coupe transversale principalement semi-circulaire.

8. Tuyau (1) selon l'une quelconque des revendications précédentes, **caractérisé en ce que** la partie d'alimentation (9) et la partie de retour (10) ont une forme en coupe transversale principalement semblable à une goutte, le pont (15) étant agencé au niveau de la base pointue (13) de la goutte.

9. Tuyau (1) selon l'une quelconque des revendications 1 à 7, **caractérisé en ce que** la partie d'alimentation (9) et la partie de retour (10) ont une forme en coupe transversale principalement semblable à une goutte, le pont (15) étant agencé au niveau de l'extrémité plus épaisse (14) de la goutte.

10. Tuyau (1) selon l'une quelconque des revendications précédentes, **caractérisé en ce que** la partie d'alimentation (9) et la partie de retour (10) sont reliées l'une à l'autre par un moyen de connexion (18) qui se dissout sous l'influence de l'humidité.

11. Procédé pour installer un tuyau (1) dans un système à basse énergie, dans lequel le tuyau (1), comprenant, reliées l'une à l'autre, une partie d'alimentation (9) pour guider du liquide de transfert jusqu'à une source de chaleur et une partie de retour (10) pour guider le liquide de transfert en retour vers un ou plusieurs moyens d'échange de chaleur (4), est guidé dans un puits de forage (3) réalisé dans le sol, **caractérisé par**
la pression de surfaces intérieures (11) de la partie d'alimentation (9) et de la partie de retour (10) orientées l'une vers l'autre l'une contre l'autre, et la connexion de la partie d'alimentation et de la partie de retour l'une à l'autre par un moyen de connexion se dissolvant (18),
le guidage du tuyau (1) dans le puits de forage (3) réalisé dans le sol,
la provocation d'une dissolution de la connexion du moyen de connexion se dissolvant (18) et d'une pression de surfaces extérieures courbées (12) de la partie d'alimentation (9) et de la partie de retour (10) opposées aux surfaces intérieures (11) contre une paroi (16) du puits de forage (3) par un mouvement rotatif, qui est mis en oeuvre en ce qui concerne un pont élastique (15) reliant la partie d'alimentation et la partie de retour l'une à l'autre.

12. Procédé selon la revendication 11, **caractérisé par** la connexion de la partie d'alimentation (9) et de la partie de retour (10) l'une à l'autre par un moyen de connexion (18) qui se dissout sous l'influence de l'humidité.

13. Procédé selon la revendication 11 ou 12, **caractérisé par** la fabrication du tuyau (1) par extrusion de sorte que la partie d'alimentation (9) et la partie de retour (10) forment un angle de 25 à 60 degrés entre leurs surfaces intérieures (11) au niveau du pont (15), et
lorsque le moyen de connexion (18) est dissous, le pont (15) force la partie d'alimentation et la partie de retour qui ont été pressées l'une contre l'autre pour s'éloigner l'une de l'autre sous l'influence d'une force de rappel accumulée au niveau du pont.

14. Procédé selon la revendication 11 ou 12, **caractérisé en ce que** lorsque la partie d'alimentation (9) et la partie de retour (10) sont remplies de liquide de transfert, les surfaces intérieures (11) gonflent,
et quand elles sont pressées l'une contre l'autre, les déformations provoquent un mouvement qui amène la partie d'alimentation et la partie de retour plus loin l'une de l'autre.
